# EUROPEAN PATENT APPLICATION

(11) **EP 4 822 392 A1**
(43) Date of publication of application: **14.10.2026**
(21) Application number: 25168729.9
(22) Date of filing: 07.04.2025
(51) Int. Cl.: G01S 13/22, G01S 13/933

(54) **METHOD, COMPUTER PROGRAM, COMPUTER-READABLE DATA CARRIER, CONTROL MODULE, RADAR DETECTION SYSTEM AND VEHICLE CONFIGURED FOR DETECTING MOVING OBJECTS**

(71) Applicant: Airbus Defence and Space GmbH, 82024 Taufkirchen (DE)
(72) Inventor: LOINGER, Andrea Federico, 82024 Taufkirchen (DE); FISCHER, Christian, 82024 Taufkirchen (DE)
(74) Representative: LKGLOBAL Partnerschaftsgesellschaft mbB

(57) **Abstract**

A method of detecting moving objects (O) with a radar detection system (2) for a vehicle (1), such as a satellite, in particular for space debris detection, a corresponding computer program (11), computer-readable data carrier (12), a control module (6), a radar detection system (2) and a vehicle (1), in particular a satellite, are provided, the method comprising the step of emitting a radar signal containing a pulse train sequence (W) comprising at least two pulse trains (V) of radar pulses (P) having different pulse repetition frequencies (PRF).

## Description

### Technical Field

The present disclosure relates to the field of the detection of possibly relatively small fast-moving objects, such as space debris, by onboard systems of vehicles, e.g. satellites. In particular, the disclosure relates to a method of detecting fast-moving objects with a radar detection system for a vehicle, such as a satellite, in particular for space debris detection, a computer program for controlling a radar detection system, a computer-readable data carrier, a control module for controlling a radar detection system of a vehicle, in particular a satellite, configured to detect fast-moving objects, such as for space debris detection, a radar detection system for a vehicle, such as an satellite, configured to detect fast-moving objects, in particular for space debris detection and to a vehicle, in particular an satellite.

### Technical Background

The amount of space debris, such as any kind of leftovers of human-made objects or other natural objects occurring in space, in particular, space orbits around planet Earth, is constantly rising. Due to the relatively high speed, the objects pose serious threats from manned and unmanned space vessels and vehicles, such as satellites, space stations, spacecraft, and alike. Therefore, space debris detection, tracking and cataloguing is increasingly important for providing Space Situational Awareness (SSA) in order to avoid unwanted interference or at least collisions with such objects.

According to the prior art, space debris detection, tracking and cataloguing (SSA) is being performed by relatively big and powerful on-ground radars together with optical sensors (telescopes). Spacecrafts mounting a radar payload for SSA applications can complement the existing debris catalogue with new, smaller objects and provide higher target revisit rate (space debris catalogue maintenance), thus enabling accurate collision avoidance warnings to different space stakeholders. However, the relative high-speed motion between space debris and space radar platform is very challenging from a radar perspective.

EP 3 904 904 A1, for example, relates to a bistatic radar for detecting an object in space. The bistatic radar comprises a transmitter system located on the surface of the Earth and a receiver system at least partially embedded in a satellite in orbit around the Earth. The receiver system comprises a radio reception chain, called a "search channel", configured to receive a search signal emitted by the transmitter system and reflected by said object. A control unit of the receiver system is configured to calculate an ambiguity function between the search signal and a replica of the signal emitted by the transmitter system, and to deduce therefrom information representative of the distance between the object and the satellite. A location unit is configured to estimate the position of the object from the information determined by the control unit.

Y. Li, T. Zeng, T. Long and Z. Wang, "Range Migration Compensation and Doppler Ambiguity Resolution by Keystone Transform," 2006 CIE International Conference on Radar, Shanghai, China, 2006, pp. 1-4, doi: 10.1109/ICR.2006.343404, state that in pulsed Doppler radar, when wideband signals are used and the target radial velocity is high, linear range migration occurs and cannot be neglected. The migration misaligns the range profiles within a coherent processing interval and degrades the coherent integration gain eventually. On the other hand, Doppler ambiguity must be resolved when the radar uses low or medium pulse repetition frequency. According to the paper, Keystone transform is used for range migration compensation. Also, a parallel searching scheme of Doppler ambiguity resolution is proposed based on Keystone transform. The simulation shows the advantages of the algorithm.

Merrill I. Skolnik, in "Introduction to radar systems", Second Edition, Mc Graw-Hill Book Company, 1. January 1980, ISBN 978-0070579095, lays down the continual development of new radar capabilities and continual improvements to the technology and practice of radar.

Methods, systems and respective devices for SSL conducted by means of vehicle-borne radars in space, i.e. space radars, have to deal with the constraint that such radar systems are much smaller and have much less power available than the ground-based ones, and need a significant Coherent Integration Time to maximize collected power.

### Summary

In view of the above, it may be seen as an object to provide a reliable radar detection system capable of providing reliable detection of fast-moving objects in space. In particular, it may be seen as an object to provide operational modes for radars allowing to increase the Coherent Integration Time for very high-dynamic targets, together with high precision range and doppler measurement. These and other objects are solved by the subject-matter of the independent claims.

According to an aspect, a method of detecting fast-moving objects with a radar detection system for a vehicle, such as a satellite, in particular for space debris detection, the method comprising the step emitting a radar signal comprising a pulse train sequence of at least two pulse trains of radar pulses having different pulse repetition frequencies.

According to an aspect, a computer program for controlling a radar detection system is provided, comprising instructions which, when the computer program is executed by a computing device and/or a radar detection system, cause the computing device and/or radar detection system to carry out a corresponding method.

According to an aspect, a computer-readable data carrier is provided, having stored thereon a corresponding computer program.

According to an aspect, a control module for controlling a radar detection system of a vehicle, in particular a satellite, configured to detect fast-moving objects, such as for space debris detection, is provided, wherein the control module is configured to carry out a corresponding method, comprises a corresponding computer program according, and/or a corresponding computer-readable data carrier.

According to an aspect, a radar detection system for a vehicle, such as a satellite, configured to detect fast-moving objects, in particular for space debris detection, is provided, wherein the radar detection system is configured to carry out a corresponding method, comprises a corresponding computer program, a corresponding computer-readable data carrier, and/or a corresponding control module.

According to an aspect, a vehicle, in particular a satellite. is provided, comprising a corresponding radar detection system.

A corresponding space situational awareness arrangement can be configured to carry out a corresponding method, may comprise a corresponding control module, computing device, radar detection system and/or satellite. The computing device can be located on the satellite and/or at a ground station where the turn-around tasks are supposed to be managed at least in part. At least one computing device located on the satellite and/or at the ground station can act as control modules. A corresponding computing device can be configured to carry out a corresponding method, can comprise a corresponding computer program, a corresponding computer-readable data carrier and/or a corresponding control module.

The pulse trains can each consist of radar pulses which are emitted at different pulse repetition frequencies. Thereby, a wide spectrum of unambiguous ranges between the object and the radar detection system may be provided for calculating the distance value. Hence, Coherent Integration Time as well as an observation time, where the radar detection system is able to detect the object, can be relatively long.

The present solution thus allows the radar detection of extremely small and fast-moving targets, together with a precise range and speed measurement, for a compact radar payload, as a sort of enhanced velocity search mode. The proposed radar detection system can therefore be integrated into and/or provide additional functionality to existing systems and platforms.

The solution has the advantage over the prior art that it enables to increase situational awareness and overall safety. Space debris radar detection and tracking from a spacecraft perspective is particularly advantageous since allows to detect much smaller targets and benefits from reduced distances between observer (the radar) and the target (the space debris), in comparison with detection from ground. Due to the absence of an atmosphere in space, that attenuates radar signal over a very long path, and due to the absence of ground clutter, as a respective geometry is observed towards cold space, radar echoes and thus objects can be detected in a very undisturbed and clear manner.

Further developments can be derived from the dependent claims and from the following description. Many of the features described with reference to a method may be implemented as device features, or vice versa. Therefore, the description provided in the context of a method for configuring a radar detection system applies in an analogous manner also to a control module, a computing device, and/or any involved apparatus, including, but not limited to satellites or other transportation means, respectively. In particular, the steps of a methods and mentioned components involved therein may be implemented as functions of a control module, a radar detection system, and/or a vehicle, and their functions may be implemented as method steps.

According to an embodiment, the method further comprises the steps of receiving radar echoes of the radar signal, and calculating a distance value of at least one object with respect to the radar detection system based on the radar echoes. The distance value can be determined based on the radar echoes. Based on the distance value, the detected object can be catalogued and/or mapped in a space debris map. A respective position and speed, possibly trajectory of the object calculated based on at least two distance values may be automatically catalogued and/or mapped. This helps, to efficiently provide comprehensive SSA.

According to an embodiment, the radar pulses are being emitted as pulse bursts. Two subsequent pulse bursts may have different pulse repetition frequencies. At least one pulse repetition frequency may be repeated. This helps in providing preferably long Coherent Integration Times and observation times, and thus to further improve SSA.

According to an embodiment, each pulse train comprises radar pulses having preferably three different pulse repetition frequencies. The pulse repetition frequencies can be designed for the enhanced velocity search mode. The pulses have different waveforms. This helps to resolve ambiguities when analysing the radar echo and to provide a fine range/Doppler measurement.

According to an embodiment, a series of pulse trains are being emitted back-to-back in order to provide a coherent integration time for radar echoes detected based on the emitted pulse trains. Thereby, coherent integration times for coherent processing of radar echoes obtained based on one or more pulse repetition frequencies in the radar signal can be provided. This further helps in providing preferably long Coherent Integration Times and observation times, and thus to further improve object detection for SSA.

According to an embodiment, the radar pulses have a pulse length of 0.6 to 0.7 preferably, 0.63 to 0.65, most preferably around 0.645 µs. Thereby, common blind ranges of around 90 to 100, probably around 96.7 metres in front of a respective radar sensor can be provided. This helps to minimise echo window times, and thus to enhance detection coverage.

According to an embodiment, the pulse train sequence has a time length of 40 to 80, preferably 50 to 70, most preferably around 60 µs. Thereby, arranged resolution for calculating distance values of detected objects can be optimised. This further helps in efficiently providing comprehensive SSA.

According to an embodiment, a look time containing a number of subsequent pulse train sequences has a time length of 0.027 to 0.031, preferably 0.025 to 0.030, most preferably around 0.029 s. In other words, the pulse train sequence can be repeated in the radar signal, such that the radar signal has a respective time length. The overall time length can be defined as a look time, possibly containing several Coherent Integration Time slots. This further helps in providing a preferably long coherent integration Time and thus to improve object detection for SSA.

According to an embodiment, the radar pulses have pulse repetition frequencies between 97 to 110, preferably between 99 to 108, most preferably between 100 and 107 kHz, and/or a pulse bandwidth between 400 to 600, preferably between 450 to 550, most preferably around 500 MHz. The carrier sequence can belong to the Kₐ-band. Resulting relatively high bandwidths of the radar signals help in resolving ambiguities and provide very fine range/Doppler measurements with very short coherent integration time but also with the possibility of efficient post detection integration.

According to an embodiment, the method further comprises the step of optically pre-detecting the object with the radar detection system for controlling the emission of the pulse train sequence. Optically pre-detected objects can be specifically targeted by the radar system in terms of timing and directing the radar signals. The optical pre-detection can therefore additionally help in efficiently providing comprehensive SSA.

### Brief Description of the Drawings

The subject matter will hereinafter be described in conjunction with the following drawing figures, wherein like numerals denote like elements, and wherein:
Fig. 1 is a schematic representation a vehicle in the exemplary form of a satellite comprising a radar detection system.
Fig. 2 is a schematic diagram illustrating requirements of radar pulse length versus blind ranges for radar signals with several pulse repetition frequencies.
Fig. 3 is a schematic diagram illustrating exemplary maximum coherent integration times depending on respective pulse repetition frequencies.
Fig. 4 is a schematic diagram illustrating an exemplary echo window sampling bandwidth depending on respective pulse repetition frequencies.
Fig. 5 is a schematic representation of an exemplary interleaved pulse repetition frequency scheme for an enhanced velocity search mode.
Fig. 6 is a schematic representation of an exemplary range Doppler map for a number of pulse repetition frequencies within a respective look time.
Fig. 7 is a schematic representation of exemplary steps of a method of detecting objects.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

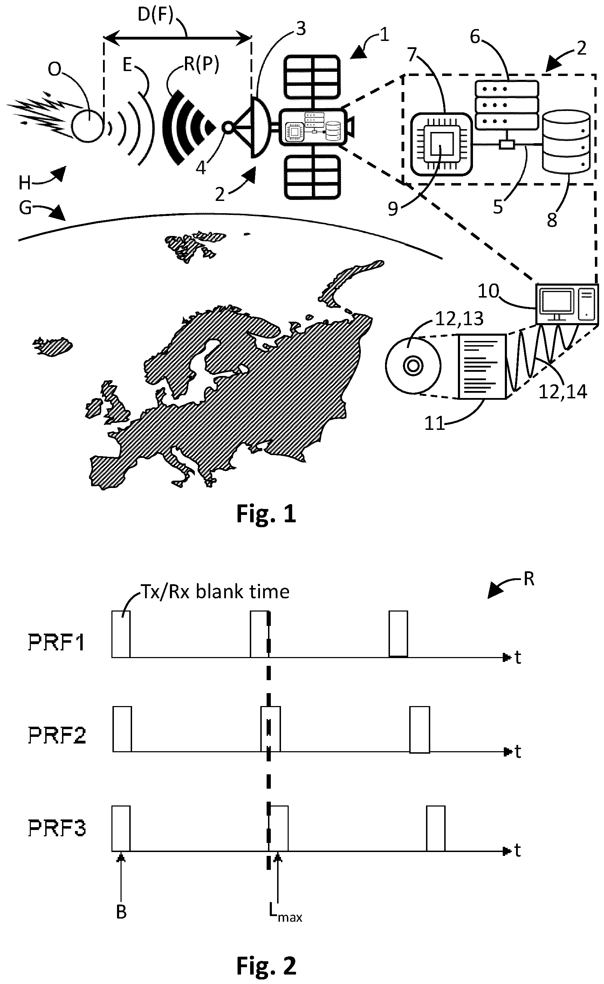

Fig. 1 shows a schematic representation of an apparatus in the form of a vehicle 1, for example, a satellite, comprising a radar detection system 2 with a radar transceiver 3 and a detection unit 4, such as an optical detector and the form of a camera, or alike. The radar transceiver 3 and/or detection unit 4 can be provided as standard components provided to the vehicle 1 that can be interfaced by the radar detection system 2 and/or as a designated part of the radar detection system 2. The radar detection system 2 and its components can be connected to each other, to the vehicle 1, the transceiver unit 3, and/or the detection units 4 via respective transmission lines 5, which can be configured to transmit data and/or electrical power in any kind of wired and/or wireless analogue and/or digital manner.

The radar detection system 2 further comprises a control module 6, an interface module 7, a storage module 8 and/or a control element 9 which can be connected to each other via the respective transmission lines 5 configured to transmit any kind of information, data, power and/or energy. The vehicle 1 and/or the radar detection system 2 can be provided with a computing device 10 that may comprise at least parts of the radar detection system 2. A computer program 11 can be stored on a computer-readable data carrier 12 which may take the form of a computer-readable medium 13 and/or data carrier signal 14 can be provided as a part of the computing device 10. Alternatively, or additionally, the radar detection system 2 may comprise the computing device 10, the computer program 11, the computer-readable data carrier 12, and/or any kind of control element 9 as well as transmission lines 5 exchanging data between the respective above-mentioned components.

The control module 6 may be provided as a part of and/or may interface the computing device 10 or vice versa. Therefore, the control module 6 may comprise any kind of processing unit, such as computer processor, ASIC, DSP, or alike, configured to process data object and/or data streams according to respective algorithms, including machine learning algorithms, or alike. Control elements 9 may be any kind of data source, sink or destination, such as measuring elements, sensors, output devices and/or actuators of the vehicle 1, the radar detection system 2, the transceiver unit 3 and/or the detection unit which may control a certain function thereof, for example, by connecting thereto, for example, through the interface module 7. The transmission lines 5 may involve any suitable wired, wireless, and or optical communication means, including lines, cables, transceivers, antennas, satellite dishes, and alike.

According to the present exemplary embodiment, the radar detection system 2 is configured to detect objects O, such as space debris and/or other spacecraft, for example other satellites, or alike, possibly involving pre-detection by the detection unit 4. The vehicle 1 carrying the radar detection system 2 can therefore be located above a planet G, such as planet Earth, in an orbit H where it may be held stationary and/or be moving, for example, in space. For calculating the distance D between the vehicle 1 and the object O, the transceiver unit 3 may emit radar signals R that can be reflected by the object O as radar echoes E within a respective radar range F of the radar detection system 3. An emission of the radar signals R containing radar pulses P may be controlled by means of data provided by the detection unit 4.

Fig. 2 shows a schematic diagram illustrating requirements of radar pulse length L versus blind ranges B for radar signals with several pulse repetition frequencies PRF, namely first pulse repetition frequency PRF1, a second pulse frequency PRF2 and a third pulse repetition frequency PRF3. For each pulse repetition frequencies PRF, respective blank times B are plotted over parallel time t lines as quotients of pulse length Tx of radar pulses P and a reception length Rx of respective radar echoes E.

The present exemplary application of the radar system 2 for detecting very fast-moving objects O, in particular for providing SSA, leads to high-demanding requirements on maximum detectable radar range Rₘₐₓ and Range Rate which results in a "medium PRF" choice for the radar payload, such as (with c = speed of light, vₘₐₓ = (relative) maximum speed of the object, and λ = carrier frequency wavelength):
- Rₘₐₓ max range => $PRF \leq \frac{c}{2 ⋅ {R}_{max}}$*,* and
- vₘₐₓ max range rate => $PRF \geq \frac{4}{λ} {v}_{max}$*.*

A medium pulse frequency PRF can be seen as a pulse repetition frequency PRF where both range and doppler of detected targets are ambiguous, compared to low pulse repetition frequency PRF (range unambiguous, doppler ambiguous) or high PRF (range ambiguous, doppler unambiguous). Since a single pulse repetition frequency PRF will most likely not satisfy the requirements as laid down above, there is a need of a switching scheme for switching between different pulse repetition frequencies PRF to resolve range and doppler ambiguities.

For this purpose, a scheme containing three different pulse repetition frequencies PRF can be defined according to the present exemplary embodiment, where all the single pulse repetition frequencies PRF may be provided as medium pulse repetition frequencies PRF. Main characteristics of such a scheme may be summarised as follows:
- The overall Time-on-target can be divided into three different coherent pulse intervals CPI: *tᵢₙₜ = tₒₜ*/3.
- The unambiguous range Ru time interval for each single pulse repetition frequency PRFₙ can be defined as ${R}_{u} = \frac{c}{2 ⋅ {PRF}_{n}}$.
- The overall, reachable unambiguous range by combining the pulse repetition frequencies can be defined as ${R}_{u} = {R}_{u 1} ⋅ \left(\frac{{R}_{u 2}}{{ΔR}_{u 1}}\right) ⋅ \left(\frac{{R}_{u 3}}{{ΔR}_{u 2}}\right)$, with *ΔR*_{*u*1} *= R*_{*u*2} - *R*_{*u*1} and *ΔR*_{*u*2} *= R*_{*u*3} - *R*_{*u*2}*.*

Several pulse repetition frequencies can be suitable to meet the requirements on the maximum unambiguous range Ru. Moreover, a corresponding desired maximum unambiguous speed can be considered. A maximum unambiguous Doppler can be computed for different pulse repetition frequencies PRF below. According to the present purpose of using the radar detection system 2 to detect fast-moving objects O, pulse repetition frequencies PRF around 50kHz would not reach the desired doppler ambiguity, while pulse repetition frequencies PRF around 200kHz do have a duty cycle of more than 10% with respective pulse lengths Tx as described in detail further down below. Consequently, the pulse repetition frequency PRF can be set to values around 100kHz as a promising candidate for a suitable pulse repetition frequencies PRF. The respective selection would satisfy range and range rate ambiguities, with a moderate pulse repetition frequency variation of e.g. 7%.

Based on the selected pulse repetition frequencies PRF other waveform characteristics can be addressed and defined. A moderate variation (7%) of pulse repetition frequencies PRF can be directly linked to a relatively small variation of duty cycle among the pulse repetition frequencies (at constant pulse length Tx). For example, considering a maximum duty cycle of 10% for Kₐ-band transmitters, the requested transmitted peak power variation among the selected three waveforms would be rather small, thus not putting strong requirements on instrument heat dissipation.

Moreover, a constant pulse length allows a common pulse slope among the three selected pulse repetition frequencies PRF, and also a common blind range. A constant pulse length Tx can be preferred over a constant duty cycle. The maximum pulse length Txₘₐₓ preferably does not merely satisfy the requirement on the maximum duty cycle (10%), but it can also not generate other blind ranges for the selected pulse repetition frequencies PRF up to the common unambiguous range Ru. Respective requirements for the maximum pulse length Txₘₐₓ may be expressed according to the following formula, according to which the maximum pulse length Txₘₐₓ is defined by taking the unambiguous ranges of the first pulse repetition frequency PRF1 and the third pulse repetition frequency PRF3 in a manner that such as their transmitting blank times B are not superimposed as depicted in Fig. 2: ${T}_{{x}_{max}} = \left({R}_{u 3}-{R}_{u 1}\right) ⋅ \frac{2}{c}$

Based on a constant exemplary pulse length Tx a common blind range B of *Tₓ ·* $\frac{c}{2}$ would incur in front of the radar sensor of the radar transceiver 3, and the overall unambiguous range can be maximized as well. Regarding pulse bandwidth constraints, a maximum requested range resolution than RBIN length can be equal to the pulse length expressed in meters, otherwise window time for the radar echo E could be wasted by too much under sampling. Respective considerations may be reflected in selecting
- a minimum requested pulse bandwidth of 1.55MHz to resolve range ambiguities, and/or
- a maximum bandwidth of 500MHz that may be allowed and desirable to reach required range resolution.

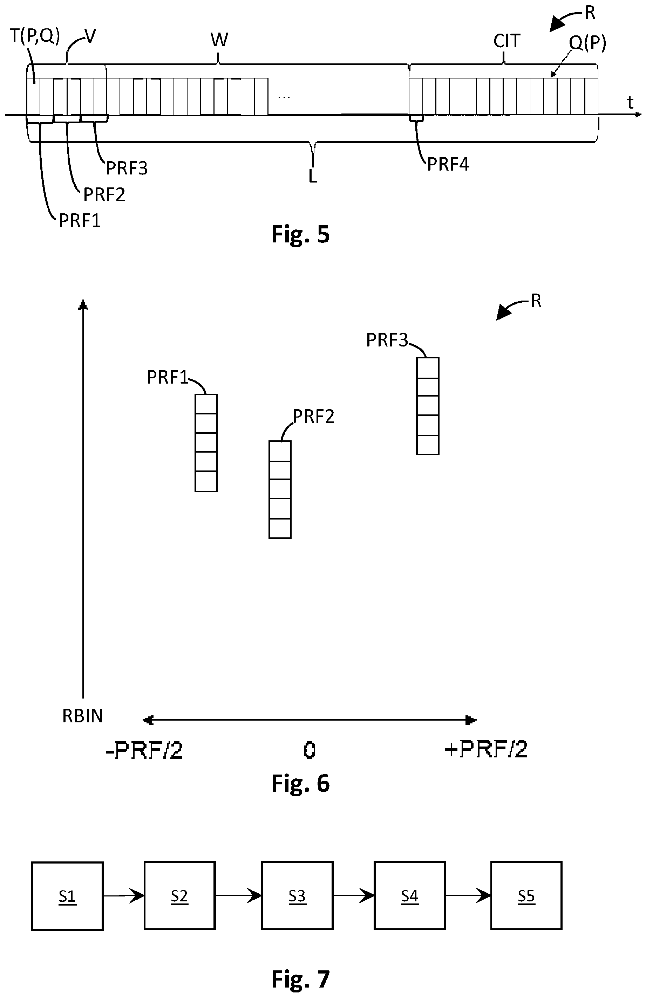

It should be noted that since the Duty Cycles should not be selected to be too small, their variation may be very moderate and also well below and upper margin of 10%. Once the main parameters of respective reforms have been configured, transmitted patterns of pulse repetition frequencies PRF can be defined, for example, based on respective target kinematics of the objects O to be detected. A main goal can be seen in a definition and expectation of a maximum coherent integration time CIT (see Fig. 5) for coherent processing of one or more pulse repetition frequencies by the control module 6, to increase a respective signal-to-noise ratio (SNR) and therefore a probability of detecting the object O.

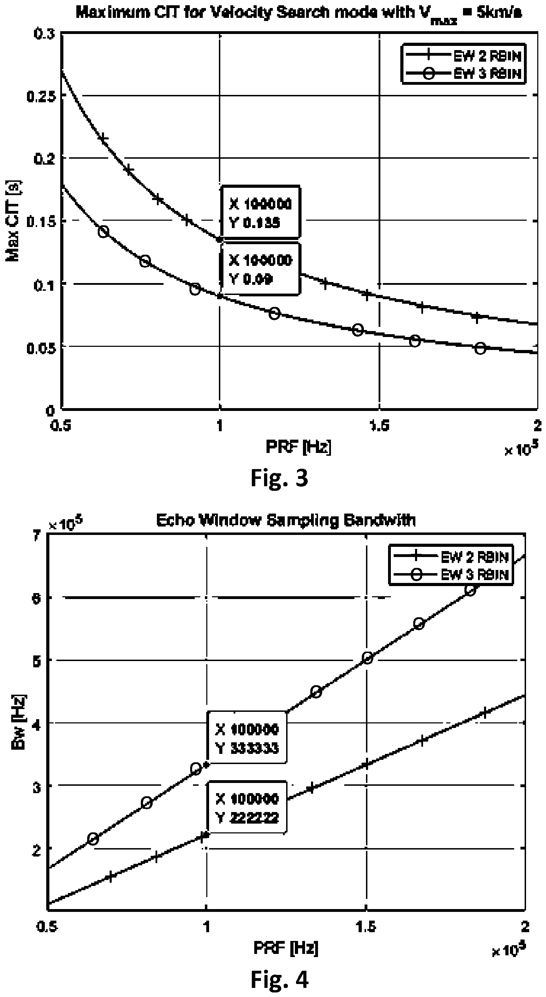

Fig. 3 shows a schematic diagram illustrating exemplary maximum coherent integration times CIT depending on respective pulse repetition frequencies. It is important to consider that the velocity search mode itself does not necessarily provide target range measurements. If the maximally possible target speed is considered, and the echo window is being sampled with 2 or 3 range bins RBIN**,** this could lead to a rather very long integration time for the selected family of pulse repetition frequencies PRF, of e.g., 0.09s or 0.135s, respectively, as illustrated in Fig. 3.

Fig. 4 shows a schematic diagram illustrating an exemplary echo window sampling bandwidth depending on respective pulse repetition frequencies PRF. The sampling bandwidth in these exemplary cases can be selected to be 3.3MHz or 2.2MHz, which would still satisfy the minimum requested bandwidth of 1.55MHz. Once the main parameters of the respective waveforms have been configured, the transmitted patterns of pulse repetition frequencies PRF can be selected on the basis of the target kinematics.

Fig. 5 shows a schematic representation of an exemplary interleaved scheme of pulse repetition frequencies PRF for the enhanced velocity search mode. Respective radar signal R may consist of pulse bursts Q each containing a pulse train T containing a number of radar pulses P according to the respective pulse repetition frequency PRF, for example, the first pulse repetition frequency PRF1, the second pulse repetition frequency PRF2, the third pulse repetition frequency PRF3 and a fourth pulse repetition frequency PRF4. The pulse bursts Q can be emitted as a repeated pulse train pattern V according to their respective pulse repetition frequencies PRF to provide a pulse train sequence W containing the repeated pulse train patterns V.

According to the present exemplary embodiment, the pulse train patterns V may have a length of 60 µs, while the pulse train sequence may have a length of 21.75 ms. The maximum coherent integration time CIT can amount 7.25 ms and is limited by target range migration (maximum target velocity) and Doppler migration (maximum target acceleration). Suitable exemplary embodiments of the radar detection system 2 would be able to sample an Echo Window of down to 2 or 3 range bins (which is rather very low range resolution), thus allowing for relative long career in integration times CIT for detecting fast-moving objects O as targets. A respective search mode may be defined as a Velocity Search (VS) mode, which may be particularly suited for head-on targets with no/low acceleration.

However, range resolution is may still be missing with such a relatively low bandwidth and, most important, the requirement on the target maximum acceleration has would have to be considered. Starting from the requirement on the maximum target speed and acceleration, the required Coherent Integration Time CIT can be defined as follows:
1. Target with maximum velocity *vₘₐₓ* shall not exceed range resolution $Δr = \frac{c}{2 B}$ during CIT: $CIT ⋅ {v}_{max} \leq \frac{c}{2 B}$
2. Target with maximum acceleration *aₘₐₓ* shall not exceed speed resolution $Δv = \frac{2}{λ} ⋅ Δf$ during CIT $CIT ⋅ {a}_{max} \leq \frac{λ}{2} ⋅ Δf \leq \frac{λ}{2} ⋅ \frac{1}{CIT}$
3. CIT can be defined as per $CIT = min \left\{\frac{c}{2 B ⋅ {v}_{max}}; \sqrt{\frac{λ}{2 ⋅ {a}_{max}}}\right\}$

When using exemplary threshold values 5km/s and 5m/s² at 36 GHz, and range resolution according to full ITU bandwidth of 500 MHz, the coherent integration time CIT would be limited to ca. 60µs as per equation (1) above. This coherent integration time CIT may be insufficient for any kind of target radar detection, with demanding target sizes, range and range rate requirements. Hence, the resulting constraint as defined by equation (2) above on coherent integration time can be advantageous (e.g. *CIT* ≤0.029s).

According to the present exemplary embodiments of the radar detection system 2 the available coherent integration time CIT of around 0.029s in combination without doppler migration can be defined as the look time or look L. Several coherent integration times CITs can be defined within the Look L of 0.029s in the present example. Pulse bandwidth variation can be selected by lowering the 500MHz bandwidth spectrum. Reducing the sensed target range migration will allow to increase the coherent integration time CIT. An exemplary low/high bandwidth scheme of pulse repetition frequencies PRF for providing the enhanced velocity search mode can be defined as follows:
- A Look L time of 0.029s may be equally split among four pulse repetition frequencies PRF as shown in Fig. 5.
- Pule repetition frequencies PRF1, PRF 2, PRF3 with high pulse bandwidth (500MHz) may help to solve range/doppler ambiguity and accurate distance values D for target range/velocity measurement.
- An additional range-ambiguous fourth pulse repetition frequency PRF4 with low a relatively low pulse bandwidth driven by maximal possible range migration for coherent integration and SNR increase can be employed.
- For example, the pulse bandwidth for the fourth pulse repetition frequency PRF4 can be set to e.g. 4.13 MHz, given by maximum range migration within a coherent integration time CIT of e.g. 7.25 ms.
- Pulse repetition frequencies PRF1 to 3 can be interleaved for range comparison and range ambiguity solution, with relatively short coherent integration times CIT of around 60µs.
- No doppler migration within the suggested Look L allows to provide a Velocity Search approach for the selected pulse repetition frequencies PRF1 to 3. There would be merely range migration, that can be compensated by means of a Keystone or Hough transformation on the range/doppler signal matrix in post a detection integration step by the radar detection system 3.
- Accurate constant velocity determination across multiple pulse repetition frequencies PRF on a single Look L can be provided while not having doppler migration within the range/doppler map for the selected pulse repetition frequencies PRF1 to 3 (see Fig. 6).
- High bandwidth waveforms allow for accurate range measurements
- Very short Look times (e.g. 0.029 s) with respect to the very long debris observation time (e.g. 100s) for the objects O to be detected would allow for multiple dwell periods, to be exploited by on-ground post detection algorithms.

Fig. 6 shows a schematic representation of an exemplary range Doppler map for a number of pulse repetition frequencies within a respective look time L. According to the present exemplary embodiment, the relatively high bandwidths are selected for the suggested pulse repetition frequencies PRF that are used to resolve ambiguities and provide fine range/doppler measurement, with very short coherent integration time but also with the possibility of efficient post detection integration. In turn, a relatively low bandwidth can be selected for an additional pulse repetition frequency PRF, such as the fourth pulse repetition frequency PRF4, which can be used to exploit/increase coherent integration times for coarse detection of objects O. Respective splits of Look times among the different pulse repetition frequencies PRF can have a different patterns, for example by considering:
- Increase PRF4 CIT up to 2/3 of a look (19.3ms), and reduce PRF1 to 3 CIT down to 1/3 of a look (9.3ms).
- Swapped PRF sequence: first PRF4, then PRF 1 to 3.

Fig. 7 shows a schematic representation of exemplary steps S of a method of detecting objects O, as they can be defined in the computer program 11. For example, in a first step S1, an object O may be protected by means of the detection unit 4. In a second step, the radar echo E of the object O may be detected. In the fourth step S4, post processing of the detected radar echo E can be performed. In a fifth step S5, distance values V and thus ranges and/or speeds relating to the object O may be calculated in any dimension required.

The radar detection system 2 may be constantly digitizing the orbit O, and may periodically store respective data and the storage module 8 and/or transmit collected data to a ground station (not shown). Depending on the amount of vehicles 1, such as satellites, equipped with a corresponding radar detection system 2, and based on a respective frequency with which the vehicles 1 are travelling in a particular region, such as respective orbits H**,** the collected data can be maximised for enhancing SSA. Thereby, worldwide extra-terrestrial data can be acquired and post-processed as desired or required by operating the radar detection system 2.

According to the present exemplary embodiments, different radar waveforms can be defined according to the Kₐ-band, to accomplish different tasks such as: target detection, target range and doppler ambiguity resolution, target range and doppler measurement. Look and CIT time boundaries can be defined based on the dynamics of the objects O, such as debris dynamics. The combination and timing (sequence, duration) of the different radar waveforms within the available Look time, allow for space debris detection and ranging. The detailed definition of the waveforms in terms of their pulse repetition frequencies PRF and pulse characteristics allow to provide an enhanced velocity search mode as presented herein.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: vehicle / aircraft
- 2: radar detection system
- 3: transceiver unit / radar emitters and sensors
- 4: detection unit / optical detector
- 6: control module
- 7: interface module
- 8: storage module
- 9: control element
- 10: computing device
- 11: computer program
- 12: computer-readable data carrier
- 13: computer-readable medium
- 14: data carrier signal

- t: time

- B: blank time / blind range
- CPI: coherent pulse interval
- D: distance value
- E: radar echo
- F: radar range
- L: look / look time
- G: planet / earth
- H: orbit / space
- O: object
- P: radar pulse
- PRF: pulse repetition frequency
- Q: pulse burst
- R: radio signal
- Ru: unambiguous range
- Rx: reception length
- S: step
- Tx: pulse length
- V: pulse train
- W: pulse train sequence

- S1: pre-detection
- S2: emit radar signal
- S3: detect radar echo
- S4: postprocessing
- S5: calculate distance values

## Claims

1. Method of detecting moving objects (O) with a radar detection system (2) for a vehicle (1), such as a satellite, in particular for space debris detection, the method comprising the step of
emitting a radar signal containing a pulse train sequence (W) comprising at least two pulse trains (V) of radar pulses (P) having different pulse repetition frequencies (PRF).

2. Method according to claim 1, further comprising the steps of receiving radar echoes (E) of the radar signal (R), and
calculating a distance value (D) of at least one object (O) with respect to the radar detection system (2) based on the radar echoes (E).

3. Method according to claim 1 or 2, wherein the radar pulses (P) are being emitted as pulse bursts (Q).

4. Method according to at least one of claims 1 to 3, wherein each pulse train (T) comprises radar pulses (P) having preferably three different pulse repetition frequencies (PRF).

5. Method according to at least one of claims 1 to 4, wherein a series of pulse trains (V) are being emitted back-to-back in order to provide a coherent integration time (CIT) for radar echoes (E) detected based on the emitted pulse trains (V).

6. Method according to at least one of claims 1 to 5, wherein the radar pulses (P) have a pulse length of 0.6 to 0.7 preferably, 0.63 to 0.65, most preferably around 0.645 µs.

7. Method according to at least one of claims 1 to 6, wherein the pulse train sequence (W) has a time length of 40 to 80, preferably 50 to 70, most preferably around 60 µs.

8. Method according to at least one of claims 1 to 7, wherein a look time (L) containing a number of subsequent pulse train sequences (W) has a time length of 0.027 to 0.031, preferably 0.025 to 0.030, most preferably around 0.029 s.

9. Method according at least one of claims 1 to 8, wherein the radar pulses (P) have pulse repetition frequencies (PRF) between 97 to 110, preferably between 99 to 108, most preferably between 100 and 107 kHz, and/or a pulse bandwidth between 400 to 600, preferably between 450 to 550, most preferably around 500 MHz.

10. Method according at least one of claims 1 to 9, further comprising the step of optically pre-detecting the object (O) with the radar detection system (2) for controlling the emission of the pulse train sequence (W).

11. Computer program (11) for controlling a radar detection system (3), comprising instructions which, when the computer program (11) is executed by a computing device (10) and/or a radar detection system (1), cause the computing device (10) and/or the radar detection system (2) to carry out a method of at least one of claims 1 to 10.

12. Computer-readable data carrier (12) having stored there the computer program according to claim 11.

13. Control module (6) for controlling a radar detection system (2) of a vehicle (1), in particular a satellite, configured to detect objects (O), such as for space debris detection, wherein the control module (6) is configured to carry out a method according to at least one of claims 1 to 10, comprises a computer program (11) according to claim 11, and/or a computer-readable data carrier (12) according to claim 12.

14. Radar detection system (2) for a vehicle (1), such as an satellite, in particular for space debris detection, wherein the radar detection system (1) is configured to carry out a method according to at least one of claims 1 to 10, comprises a computer program (11) according to claim 11, a computer-readable data carrier (12) according to claim 12, and/or a control module (6) according to claim 13.

15. Vehicle (1), in particular a satellite, comprising a radar detection system (2) according to claim 14.
